# EUROPEAN PATENT SPECIFICATION

(11) **EP 1 808 245 B1**
(45) Date of publication and mention of the grant of the patent: **18.03.2009**
(21) Application number: 07000700.0
(22) Date of filing: 15.01.2007
(51) Int. Cl.: B23B 29/32, B23Q 39/02

(54) **Tool turret**
Werkzeugrevolver
Porte-outil de tourelle

(30) Priority: 17.01.2006 KR 20060004777
(43) Date of publication of application: 18.07.2007
(73) Proprietor: EWS Korea Co., Ltd., Changwon-city Kyoungnam-do (KR)
(72) Inventor: Park, Joong-han, Kimhae-city Kyoungnam-do (KR)
(74) Representative: HOFFMANN EITLE

(56) References cited:
- FR-A1- 2 704 789
- JP-A- 10 315 014
- US-A- 4 949 443

## Description

### BACKGROUND OF THE INVENTION

### Field of the Invention

The present invention relates to a tool turret (turret head), and more particularly, to a tool turret which is adapted to transmit power using a belt instead of a pair of bevel gears which have been used conventionally, thereby eliminating the frictional noises due to the contact between the bevel gears.

### Background of the Related Art

Generally, a conventional tool turret is configured such that power is transmitted from a main motor to a shaft, and a pair of bevel gears are adapted to transmit the power of the shaft to each turning tool.

According to the conventional tool turret, the power of the main motor transmitted to the shaft is transmitted to a drive shaft by means of the pair of bevel gears being engaged with each other, with a result that much noise is generated by the contact between the bevel gears.

### SUMMARY OF THE INVENTION

Accordingly, the present invention has been made in view of the above-mentioned problems occurring in the prior art, and it is an object of the present invention to provide a tool turret which can transmit the power of a main motor to a drive shaft by using a belt, instead of existing bevel gears, thereby reducing the noises generated during the exchange of a tool and during the driving of a turning tool.

It is another object of the present invention to provide a tool turret which is adapted to drive a turning tool using a belt, instead of existing bevel gears, thereby giving some advantages of simple structure, easy assembling, and convenient maintenance and repair.
To achieve the above objects, according to the present invention, there is provided a tool turret which includes: a main motor for driving turning tools; and a servo motor for generating power required for exchange of a tool, characterized by further comprising: a shaft rotatably coupled with the main motor by means of a coupling; a first pulley coupled around the outer periphery of one end portion of the shaft; a second pulley disposed in a gear box in such a manner as to correspond to the first pulley; a belt connected between the first and second pulleys for transmitting power from the shaft; a drive shaft coupled to the second pulley in such a manner as to pass through the second pulley in the gear box; a tool drive shaft coupled to the drive shaft by means of a key for transmitting the power from the drive shaft; and the turning tools adapted to be driven by means of the tool drive shaft.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is an exemplary view showing the configuration of a tool turret according to the present invention;

FIG.2 is a side view of FIG.1;

FIGS.3 and 4 are partially enlarged views showing the tool turret according to the present invention;

### DETAILED DESCRIPTION OF THE PREFERRED EMBODIMENT

According to the present invention, there is provided a tool turret (turret head) that that is adapted to transmit power to the inside of the tool turret using a belt in stead of a pair of existing bevel gears, thereby eliminating the frictional noises due to the contact between the bevel gears.

Now, an explanation of a tool turret according to a preferred embodiment of the present invention will be given in detail with reference to the attached drawings.

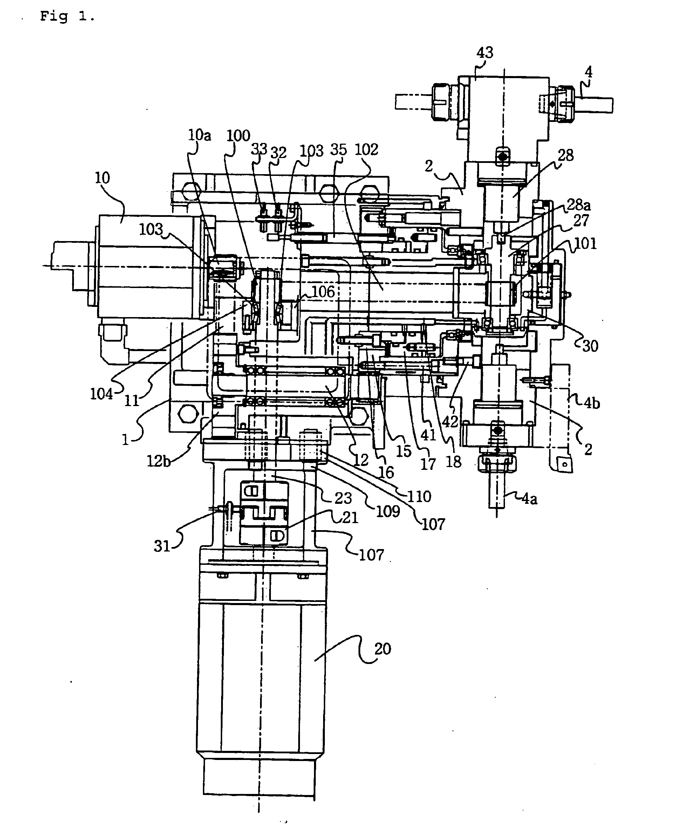

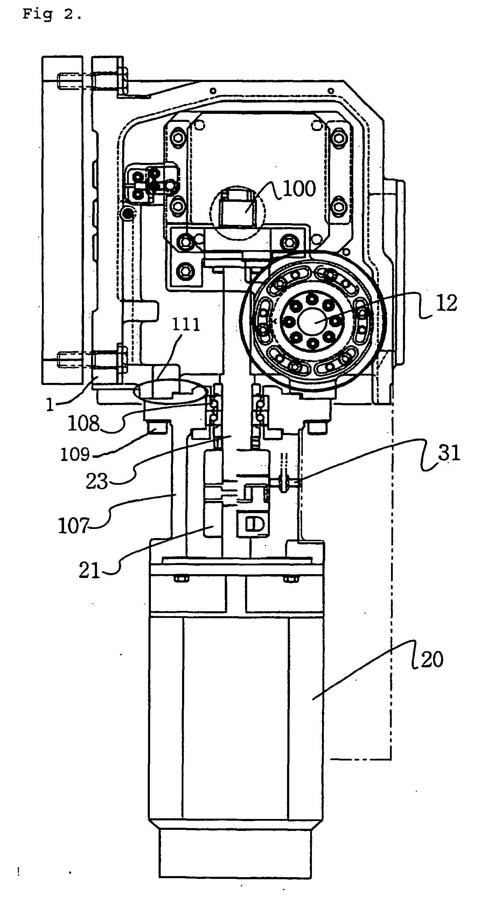

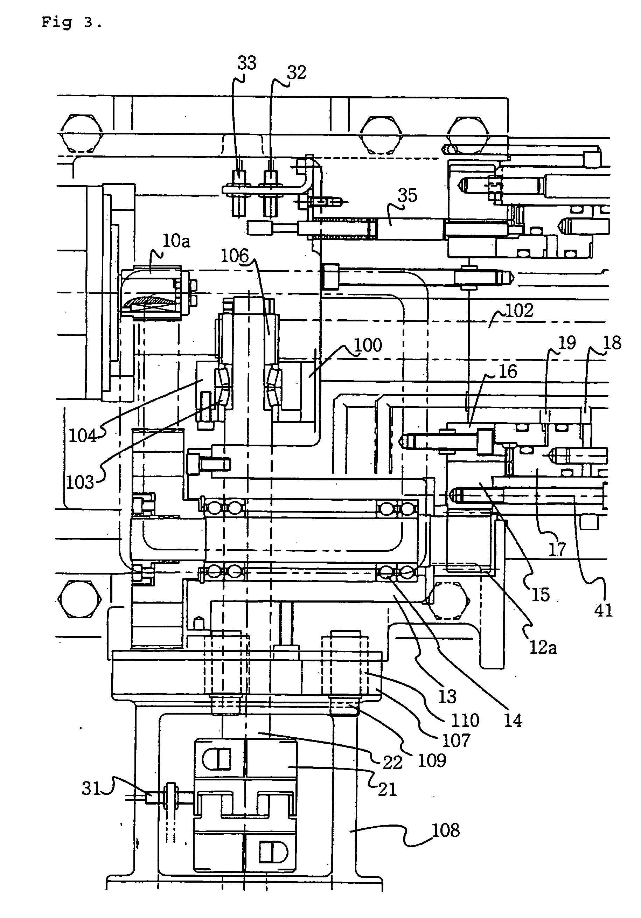

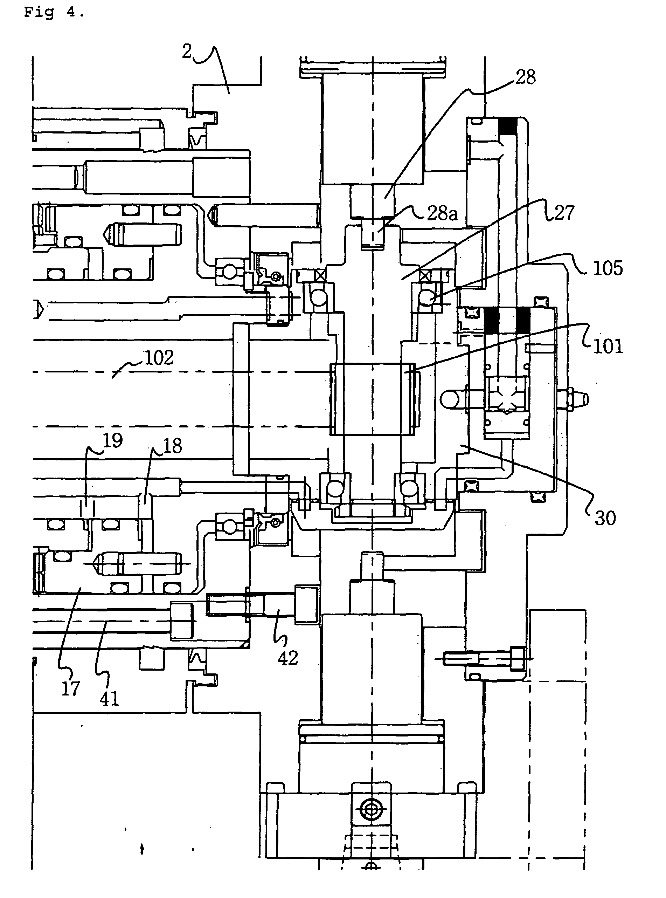

FIG.1 is an exemplary view showing the configuration of a tool turret according to the present invention, FIG.2 is a side view of FIG.1, and FIGS.3 and 4 are partially enlarged views showing the tool turret according to the present invention. According to the present invention, a tool turret which includes: a main motor 20 for driving turning tools 4 and 4a; and a servo motor 10 for generating power required for exchange of a tool, characterized in that a shaft 23 is rotatably coupled with the main motor 20 by means of a coupling 21, a first pulley 100 is coupled around the outer periphery of one end portion of the shaft 23, a second pulley 101 is disposed in a gear box 30 in such a manner as to correspond to the first pulley 100, a belt 102 is connected between the first and second pulleys 100 and 101 for transmitting power from the shaft 23, a drive shaft 27 is coupled to the second pulley 101 in such a manner as to pass through the second pulley in the gear box 30, a tool drive shaft 28 coupled to the drive shaft 27 by means of a key 28a for transmitting the power from the drive shaft 27, and the turning tools 4 and 4a are driven by means of the tool drive shaft 28.

FIG.2 shows the configuration of the tool turret according to the present invention, wherein all the parts of FIG.1 are not illustrated.

Referring first to a tool exchange operation, the power generated from the servo motor 10 is transmitted to the gear shaft 12 through a timing belt 11 disposed between a motor pulley 10a and a timing pulley 12b. The power that is transmitted to the gear shaft 12 rotates a turning curvic coupling 15, thereby rotating a disc 2 coupled with the turning curvic coupling 15 by means of bolts 41 and 42.

After the tool exchange operation is finished, cutting is conducted by the changed tool. At this time, an oil pressure is applied to a first inlet port 18, such that a piston curvic coupling 17 is coupled with a fixed curvic coupling 16 and the turning curvic coupling 15. Thereby, the turning curvic coupling 15 is not moved, such that the disc 2 becomes fixed.

At the same time, cutting starts. In a case where an object is cut by using a non-turning tool like the cutting tool 4b, there is no need for driving the main motor 20, and contrarily, in a case where the object is cut by using a turning tool like a drill, the main motor 20 is driven.

The power generated from the main motor 20 is transmitted to the shaft 23 coupled with the main motor 20 by means of the coupling 21, and the shaft 23 is coupled with the first pulley 100 around one end periphery thereof. The second pulley 101 is disposed in the gear box 30 in such a manner as to correspond with the first pulley 100, and the belt 102 is connected between the first and second pulleys 100 and 101.

The drive shaft 27 is coupled to the second pulley 101 in such a manner as to pass through the second pulley 101 in the gear box 30, such that the drive shaft 27 and the second pulley 101 are at the same time rotated.

The drive shaft 27 has a key groove (with no reference numeral) formed on one side thereof and the key 28a adapted to be inserted into the key groove is formed on one side of the tool drive shaft 28, such that the key 28a is insertedly coupled to the key groove for transmitting the rotating power of the tool drive shaft 28 to the drive shaft 27. The power transmitted to the tool drive shaft 28 is transmitted to the turning tool 4 through a power transmitting means (which is not shown in the drawing) disposed in a tool body 43.

If the shaft of the turning tool 4 and the tool drive shaft 28 are disposed in a perpendicular relation with each other, the power transmitting means is formed of a pair of bevel gears and contrarily, if the two shafts are disposed in a horizontal relation with each other, the tool drive shaft 28 just rotates the turning tool 4.

The shaft 23 has a bracket 104 disposed around one side periphery thereof, and the bracket 104 has a bearing 103 disposed at the inside thereof, such that the bracket 104 and the bearing 103 serve to smoothly rotate the shaft 23 and to prevent the shaft 23 from being moved in a circumferential direction.

Reference numerals which are not described above are a dog 35, a first proximity switch 31, a second proximity switch 32, a third proximity switch 33; a space 106, a motor bracket 107, a bolt 109, and a longitudinal hole 110.

First, the dog 35 and the second and third proximity switches 32 and 33 are parts for checking the coupling relation of the curvic couplings. If the dog 35 is sensed through the third proximity switch 33, the curvic couplings are in the coupling relation with one another, and if sensed through the second proximity switch 32, the curvic couplings are released from the coupling relation.

That is to say, if the curvic couplings are in the coupling relation with one another, cutting is carried out, and if the curvic couplings are released from the coupling relation, the rotation of the disc 2, that is, the tool exchange is carried out.

The first proximity switch 31 is disposed at one side of the coupling 21, for checking whether tool exchange is possible or not. In other words, the coupling 21 has a hole (which is not shown in the drawing) disposed around one side portion thereof, such that when an object is not sensed by the hole of the coupling 21, that is, when the first proximity switch 31 is turned off, the tool exchange is carried out. In more detail, if the disc 2 is rotated for the tool exchange at the state where the key 28a of the tool drive shaft 28 is not aligned with the key groove of the drive shaft after the cutting, the key 28a and the key groove may be broken.

So as to check the accurate coupling position and to prevent the danger generated during the tool exchange, therefore, the drive shaft 27 should be rotated to the same number of rotations of the shaft 23, such that the belt 102 is desirably formed of a timing belt causing no slipping.

The tension of the belt 102 can be adjusted by the distance variations between the shaft 23 and the drive shaft 27. In other words, in a case where the belt 102 has low tension, the shaft 23 is moved to the left side in FIGS.1 and 2, so as to extend the distance between the shaft 23 and the drive shaft 27, and contrarily, in a case where the belt 102 has high tension, the shaft 23 is moved to the right side to make the tension of the belt 102 lowered.

At this time, the turret body 1 has a motor bracket 107 disposed around one side periphery thereof in such a manner as to be fixed by means of a bolt 109 thereto, the motor bracket 107 having a bearing 108 provided for constantly rotating the shaft 23.

The motor bracket 107 is moved along a slide face 111 formed on the body 1 and has the longitudinal hole 110 formed at the position to which the bolt 109 is coupled, such that the coupling position of the motor bracket 107 with the body 1 can be adjusted along the longitudinal hole 110.

The space 106 is formed at one side of the flange 104 so as to compensate for the moving distance of the shaft 23. That is to say, only when the shaft of the main motor 20 side is moved together with the shaft of the pulley 100 side, the shaft 23 and the belt 102 are in a particular relation with each other, such that the variations of the thickness of the space 106 cause the moving distance of the shaft 23 to be compensated.

On the other hand, upon the assembling of the whole parts of the tool turret, the tension of the belt 102 is adjusted by the variations of the thickness of the space 106, and after that, the motor bracket 107 is moved along the longitudinal hole 110 formed thereon in such a manner as to be fixed by means of the bolt 109 at the position where the shaft 23 and the belt 102 are in a particular relation with each other.

In the preferred embodiment of the present invention, the number of rotations of the shaft 23 is the same as that of the drive shaft 27, but if necessary, it may be different from that of the drive shaft 27.

In other words, the circumference ratios between the pulleys 100 and 101 are set different wherein the drive shaft 27 is rotated one time when the shaft 23 is rotated a couple of times, and otherwise, the drive shaft 27 is rotated a couple of times when the shaft 23 is rotated one time.

## Claims

1. A tool turret which includes: a main motor (20) for driving turning tools (4,4a); and a servo motor (10) for generating power required for exchange of a tool, **characterized by** further comprising:
a shaft (23) rotatably coupled with the main motor (20) by means of a coupling (21);
a first pulley (100) coupled around the outer periphery of one end portion of the shaft (23);
a second pulley (101) disposed in a gear box (30) in such a manner as to correspond to the first pulley (100);
a belt (102) connected between the first and second pulleys (100, 101) for transmitting power from the shaft (23);
a drive shaft (27) coupled to the second pulley (101) in such a manner as to pass through the second pulley (101) in the gear box (30);
a tool drive shaft (28) coupled to the drive shaft (27) by means of a key (28a) for transmitting the power from the drive shaft (27); and
the turning tools (4,4a) adapted to be driven by means of the tool drive shaft (28).

2. The tool turret according to claim 1, wherein the belt (102) is formed of a timing belt for preventing slipping.

3. The tool turret according to claim 1 or 2, wherein the pulleys (100,101) have different circumference ratios such that the number of rotations of the shaft (23) is different from that of the drive shaft (27).

4. The tool turret according to claim 1, 2 or 3, wherein the shaft (23) has a space (106) disposed around the outer periphery of one side thereof, for adjusting the tension of the belt (102).

5. The tool turret according to claim 4, wherein a motor bracket (107) is moved along a slide face (111) formed on a turret body (1) such that the moving distance between the shafts at the pulleys is compensated by means of the space (106) so as to adjust the tension of the belt (102).

## Patentansprüche

1. Werkzeugrevolver, der enthält: einen Hauptmotor (20) zum Antreiben von Drehwerkzeugen (4, 4a); und einen Servomotor (10) zum Erzeugen einer Leistung, die zum Austausch eines Werkzeugs benötigt wird, **dadurch gekennzeichnet, dass** dieser ferner umfasst:
eine Welle (23), die drehbar mit dem Hauptmotor (20) mittels einer Verankerung (21) verankert ist;
eine erste Rolle (100), die um den äußeren Umfang des ersten Endabschnitts der Welle (23) verankert ist;
eine zweite Rolle (101), die in einem Getriebekasten (30) auf eine solche Weise angeordnet ist, dass sie der ersten Rolle (100) entspricht;
einen Riemen (102), der zwischen der ersten und zweiten Rolle (100, 101) zum Übertragen einer Leistung von der Welle (23) verbunden ist;
eine Antriebswelle (27), die mit der zweiten Rolle (101) auf eine solche Weise verankert ist, dass sie in dem Getriebekasten (30) durch die zweite Rolle (101) tritt;
eine Werkzeugantriebswelle (28), die mit der Antriebswelle (27) mittels einer Passfeder (28a) zum Übertragen der Leistung von der Antriebswelle (27) verankert ist; und
wobei die sich drehenden Werkzeuge (4, 4a) angepasst sind, um mittels der Werkzeugsantriebswelle (28) angetrieben zu werden.

2. Werkzeugrevolver nach Anspruch 1, bei dem der Riemen (102) aus einem Zahnriemen zum Verhindern eines Rutschens ausgebildet ist.

3. Werkzeugrevolver nach Anspruch 1 oder 2, bei dem die Rollen (100, 101) verschiedene Umfangsverhältnisse aufweisen, so dass sich die Anzahl der Umdrehungen der Welle (23) von der der Antriebswelle (27) unterscheidet.

4. Werkzeugrevolver nach Anspruch 1, 2 oder 3, bei dem die Welle (23) einen Raum (106) aufweist, der um den äußeren Umfang einer Seite davon zum Anpassen der Spannung des Riemens (102) angeordnet ist.

5. Werkzeugrevolver nach Anspruch 4, bei dem ein Motorträger (107) entlang einer Gleitfläche (111) bewegt wird, die auf einem Revolverkörper (1) so ausgebildet ist, dass der Bewegungsabstand zwischen den Wellen an den Rollen mittels des Raums (106) so kompensiert wird, dass die Spannung des Riemens (102) angepasst wird.

## Revendications

1. Porte-outil de tourelle qui comprend: un moteur principal (20) destiné à entraîner des outils de tournage (4, 4a); et un servomoteur (10) destiné à générer de l'énergie nécessaire à l'échange d'un outil, **caractérisé en ce qu'**il comprend en outre:
un arbre (23) couplé de manière rotative au moteur principal (20) au moyen d'un élément d'accouplement (21);
une première poulie (100) couplée autour de la périphérie extérieure d'une partie d'extrémité de l'arbre (23);
une deuxième poulie (101) disposée dans une boîte à engrenages (30) de telle sorte à correspondre à la première poulie (100);
une courroie (102) reliée entre les première et deuxième poulies (100, 101) destinée à transmettre l'énergie provenant de l'arbre (23);
un arbre d'entraînement (27) couplé à la deuxième poulie (101) de telle sorte à traverser la deuxième poulie (101) dans la boîte à engrenages (30);
un arbre d'entraînement d'outil (28) couplé à l'arbre d'entraînement (27) au moyen d'une clé (28a) destiné à transmettre l'énergie provenant de l'arbre d'entraînement (27); et
les outils de tournage (4, 4a) adaptés pour être entraînés au moyen de l'arbre d'entraînement d'outil (28).

2. Porte-outil de tourelle selon la revendication 1, dans lequel la courroie (102) est constituée d'une courroie de réglage destinée à empêcher le patinage.

3. Porte-outil de tourelle selon la revendication 1 ou 2, dans lequel les poulies (100, 101) présentent différents rapports de circonférence de sorte que le nombre de rotations de l'arbre (23) soit différent de celui de l'arbre d'entraînement (27).

4. Porte-outil de tourelle selon la revendication 1, 2 ou 3, dans lequel l'arbre (23) présente un espace (106) disposé autour de la périphérie extérieure d'un côté de celui-ci, afin de régler la tension de la courroie (102).

5. Porte-outil de tourelle selon la revendication 4, dans lequel un support de moteur (107) est déplacé le long d'une face coulissante (111) formée sur un corps de tourelle (1) de sorte que la distance de déplacement entre les arbres au niveau des poulies soit compensée au moyen de l'espace (106) de sorte à régler la tension de la courroie (102).
